# EUROPÄISCHE PATENTSCHRIFT

(11) **EP 0 846 277 B1**
(45) Veröffentlichungstag und Bekanntmachung des Hinweises auf die Patenterteilung: **17.02.1999**
(21) Anmeldenummer: 96928335.7
(22) Anmeldetag: 23.07.1996
(51) Int. Cl.: G01V 8/10

(54) **VORRICHTUNG ZUR FUNKTIONSKONTROLLE VON LICHTSCHRANKEN**
FUNCTIONAL CONTROL DEVICE FOR PHOTOELECTRIC BARRIERS
DISPOSITIF POUR LE CONTROLE DU FONCTIONNEMENT DE BARRAGES PHOTOELECTRIQUES

(30) Priorität: 21.08.1995 DE 19530601
(43) Veröffentlichungstag der Anmeldung: 10.06.1998
(73) Patentinhaber: NSM AKTIENGESELLSCHAFT, 55411 Bingen (DE)
(72) Erfinder: ZIMMER, Manfred, D-55452 Rümmelsheim (DE)
(74) Vertreter: Becker, Bernd, Dipl.-Ing.
(86) Internationale Anmeldenummer: DE9601396
(87) Internationale Veröffentlichungsnummer: WO9707417

(56) Entgegenhaltungen:
- DE-A- 3 518 025
- DE-C- 4 337 518
- US-A- 4 075 507

## Beschreibung

Die Erfindung betrifft eine Vorrichtung zur Funktionskontrolle einer Lichtschranke.

Lichtschranken sind sehr verbreitet verwendete Bauteile. Vielfach dienen sie als Sicherungs- oder Auslöseeinrichtung, und daher ist ihre Funktionssicherheit von großer Bedeutung.

Infolge von Bauteiländerungen, wie z.B. Alterungseffekten, Abnehmen der Leuchtdiodenstrahlenintensität, Temperaturänderungen etc. beim Sender kann es zu Stromänderungen im Lichtempfänger kommen, so daß eine Lichtschrankenschaltung nicht nur abhängig von Bauteiltoleranzen, sondern auch von Alterungseffekten, Verschmutzungen, Rauch etc. ist.

In der DE 41 21 986 A ist eine Vorrichtung zur Verhinderung von Manipulationen an Automaten beschrieben, bei der eine Sicherheitseinrichtung zur hochempfindlichen Erfassung von Manipulationen in einem im Verhältnis zum Erkennungsobjekt breiten Einführungsschacht als Lichtschranke mit einem Lichtsensor und einem Lichtempfänger ausgebildet ist. Stromänderungen des Lichtempfängers werden ausgewertet, um Kurzzeitänderungen zu erfassen und in einem solchen Fall eine Rückgabeeinrichtung für möglicherweise manipulierte Münzen, Geldscheine, etc. auszulösen. Bei der bekannten Lichtschranke ist dem Lichtsender ein erster Transistor vorgeschaltet, mit dessen Basis der eine Anschluß des Lichtempfängers verbunden ist derart, daß alle Stromänderungen des Lichtempfängers der Basis zugeführt werden, und eine Diskriminatoreinrichtung dient zur Erfassung der Kurzzeitänderungen des Stroms durch den Lichtsender. Bei dieser Schaltungsausgestaltung führt eine Stromzunahme im Lichtempfänger zu einer Stromabnahme im Lichtsender. Kommt es z.B. aufgrund von Alterungseffekten zu Stromänderungen im Lichtempfänger, so wird dies durch eine Stromzunahme im Lichtsender kompensiert.

Die bekannte Vorrichtung ermöglicht es indessen nicht, Ausfälle, insbesondere zunächst sporadische Ausfälle einer Lichtschranke möglichst vorab festzustellen. Zu solchen Ausfällen kommt es anfangs bei zu geringer Lichtleistung des Senders oder Verschmutzung von Sender bzw. Empfänger, wobei die sporadischen Ausfälle nach einiger Zeit zu Dauersystemausfällen werden. Die sporadischen Ausfälle sind indessen schwierig zu lokalisieren, wobei Funktionstests durch vielfache Anordnung von Lichtschranken an unzugänglichen Stellen erschwert sind. Häufig werden bei Tests keine Fehler festgestellt, da kurz vor endgültigem Ausfall einer Lichtschranke diese zwar noch arbeitet, aber bereits geringere Leistung zeigt.

Daher wäre es zweckmäßig, die Lichtleistung bzw. den Verschmutzungsgrad einer Lichtschranke überprüfen zu können und/oder frühzeitig eine Vorwarnung bezüglich eines voraussichtlichen Ausfalls einer Lichtschranke abgeben zu können.

Der Erfindung liegt daher die Aufgabe zugrunde, eine Funktionsprüfung und eine Früherkennung des Ausfalls von Lichtschranken zu ermöglichen.

Diese Aufgabe ist erfindungsgemäß bei einer Vorrichtung mit den Merkmalen des Anspruchs 1 gelöst. Vorteilhafte Weiterbildungen der erfindungsgemäßen Vorrichtung sind Gegenstand der abhängigen Ansprüche.

Bei einer erfindungsgemäßen Vorrichtung zur Funktionskontrolle einer Lichtschranke mit einem Sender und Empfänger ist somit der Sender an einen Versorgungsanschluß angeschlossen, und die Vorrichtung zur Funktionskontrolle umfaßt zwei Transistoren, einen Kondensator, drei Widerstände und vier Anschlüsse. Als erster Anschluß ist der Versorgungsanschluß des Senders der Lichtschranke vorgesehen. Ein erster der Transistoren ist zwischen den ersten Anschluß (V2) und den zweiten Anschluß (V1) geschaltet und seine Basis ist über eine Parallelschaltung eines zweiten Transistors und eines Kondensators mit einem dritten Anschluß verbunden. Der Kondensator ist über den ersten Widerstand auch mit dem zweiten Anschluß verbunden. Eine Reihenschaltung des zweiten und dritten Widerstands ist zwischen dem ersten Anschluß und dem dritten Anschluß angeschlossen und der Knotenpunkt zwischen diesen beiden Widerständen ist der Anschluß für eine Referenzspannung. In Betrieb liegt an der Basis des zweiten Transistors ein Ein/Ausschaltsignal an.

Mittels des Ein/Ausschaltsignals kann somit die Stromversorgung des Senders ein- und ausgeschaltet werden. Nach dem Einschalten steigt die Versorgungsspannung innerhalb einer bestimmten Zeit stetig an. Der Wert der Spannung wird über die Referenzspannung eraßt.

Zur Diagnose wird zunächst eine Ausrichtung der Lichtschranke vorgenommen derart, daß die Lichtstrecke durchleuchtet ist. Dann wird die Versorgungsspannung der Lichtschranke zunächst kurz aus-, anschließend wieder eingeschaltet. Während die Spannungsversorgung des entsprechenden Senders nun stetig bis zur vollen Betriebsspannung ansteigt, wird das Ausgangssignal des Empfängers überwacht. Zu dem Zeitpunkt, zu dem der Empfänger das Sendersignal empfängt, wird der Wert der Referenzspannung erfaßt. Diese ist proportional zum Betriebsstrom des Senders und kann zur Bewertung der Qualität der Lichtstrecke verwendet werden.

Vorteilhaft ist insbesondere mittels einer Diskriminationseinrichtung vorgesehen, daß der Wert der Referenzspannung mit einem vorgegebenen Wert verglichen wird. Wird dieser unterschritten, so kann die Lichtschranke als funktionsfähig angesehen werden. Vorteilhaft wird der vorgegebene Wert so tief gewählt, daß die Lichtschranke auch bei Überschreiten zunächst noch funktionsfähig ist. Mit Überschreiten des vorgegebenen Werts kann jedoch eine Verschlechterung der Lichtschrankenfunktion festgestellt werden und vor Ausfall bereits ein Frühwarnsignal abgegeben werden. Durch die Vorwiderstände kann der Sender so dimensioniert werden, daß beispielsweise 2/3 des nominellen Stroms ausreichen, um den Empfänger innerhalb seiner Spezifikation genügend Licht zum Schalten zu liefern. Sendet der Empfänger bereits ab 2/3 des nominellen Betriebsstroms das Signal "ein", so wird eine solche Lichtschranke mit 100% Qualität bewertet. Wird das Signal "ein" jedoch erst bei einem Betriebsstrom > 2/3 des nominellen Betriebsstroms abgegeben, so wird entsprechend die Qualität mit < 100% bewertet, wobei die Lichtschranke anhand des Werts der zum Betriebsstrom proportionalen Referenzspannung noch qualitativ bewertet werden kann, d.h. es ergibt sich die Möglichkeit eines Qualitätssignals.

Die Anwendungsmöglichkeiten dieser Schaltung sind verschiedenartig. Es kann z.B. vorgesehen sein, daß die erfindungsgemäße Funktionskontrolleinrichtung automatisch mit Einschalten der Lichtschranke ausgelöst wird (automatischer Selbsttest). Mit Betriebsbeginn kann somit festgestellt werden, ob die Lichtschranke noch funktionsfähig oder ausreichend funktionsfähig ist oder nicht. Alternativ oder zusätzlich kann auch vorgesehen sein, einen solchen Autotest von Hand durch eine Bedienungsperson auszulösen, um zu einem gewünschten Zeitpunkt eine Diagnose zu erhalten.

Die Erfindung wird im folgenden weiter anhand eines bevorzugten Ausführungsbeispiels und der Zeichnung beschrieben.

In der Zeichnung zeigen:
- Fig. 1: einen Stromversorgungskreis für Lichtschranken,
- Fig. 2: ein Beispiel für eine Anwendung der erfindungsgemäßen Vorrichtung zur Funktionskontrolle mehrerer Lichtschranken und
- Fig. 3: ein Zeitdiagramm, das den Signalverlauf (a) des Senderstroms und (b) des Empfänger-Ausgangssignalsliefert.

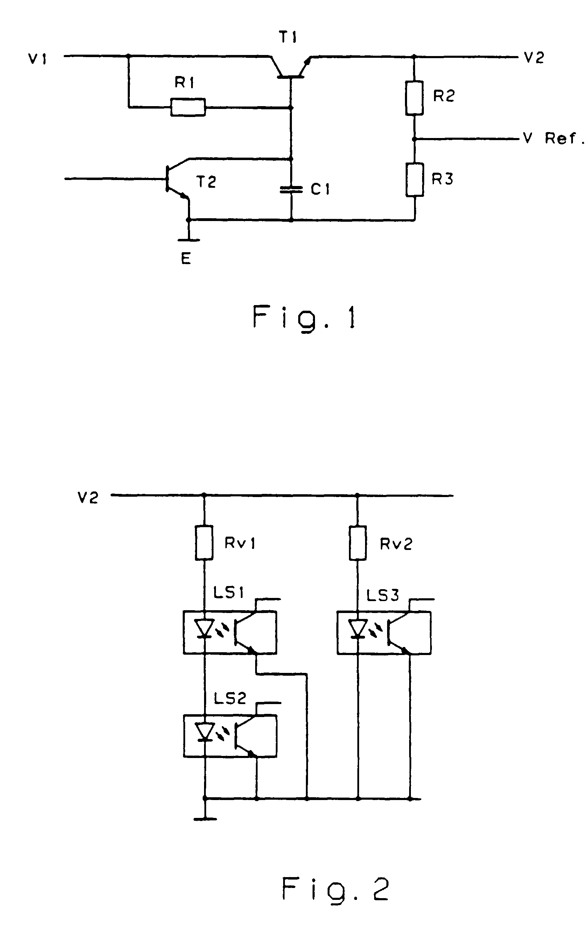

Es wird zunächst auf Fig. 1 Bezug genommen, die eine Stomversorgung für Lichtschranken zeigt. Zwischen einem ersten Anschluß V2 an eine Versorgungsspannungsquelle für den Sender und einem zweiten Anschluß V1 ist ein erster Transistor T1 geschaltet. Zwischen der Basis des Transistors T1 und dem zweiten Anschluß V1 ist ein Widerstand R1 angeschlossen. Die Basis des ersten Transistors T1 ist über eine Parallelschaltung eines zweiten Transistors T2 und eines Kondensators C1 mit einem dritten Anschluß verbunden. Der Kondensator C1 ist über den ersten Widerstand R1 auch mit dem zweiten Anschluß V1 verbunden. Zwischen dem ersten Anschluß V2 und dem dritten Anschluß ist eine Reihenschaltung eines zweiten und dritten Widerstands R2, R3 angeschlossen. Diese Reihenschaltung bildet einen Spannungsteiler, wobei zwischen den beiden Widerständen ein dritter Anschluß für eine Referenzspannung vorgesehen ist. An der Basis des zweiten Transistors T2 liegt ein Ein/Ausschaltsignal an.

Bei diesem Funktionskontrollkreis wird die Versorgungsspannung eines oder mehrerer Sender von Lichtschranken von einem Steuerglied (Controller) über den Transistor T2 ein- bzw. ausgeschaltet. Ist der Transistor T2 eingeschaltet, d.h. leitend, wird der Kondensator C1 entladen und die Versorgungsspannung der Sender beträgt 0 V. Wird der Transistor T2 ausgeschaltet, wird der Kondensator C1 über den ersten Widerstand R1 stetig aufgeladen. Der erste Transistor T1 folgt der Spannung über dem Kondensator C1, und die Versorgungsspannung V2 steigt steigt bis zur nominellen Betriebsspannung an. Die proportionale Referenzspannung VRef wird an das Steuerglied geführt.

In Fig. 2 ist eine typische Applikation eines solchen Kontrollkreises veranschaulicht. Hierbei sind eine Reihenschaltung aus zwei Lichtschranken LS1 und LS2 und eine dritte Lichtschranke LS3 parallel geschaltet. Die hier dargestellte Versorgungsspannung V2 entspricht der Versorgungsspannung V2 von Fig. 1.

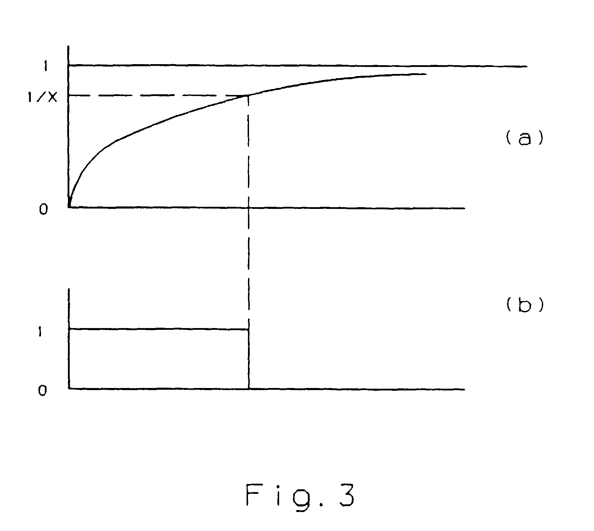

Fig. 3 veranschaulicht den Signalverlauf des Senderstroms und des Empfänger-Ausgangssingnals. Die Abszisse zeigt jeweils den Zeitverlauf an, während die Ordinate den Wert des Senderstroms- bzw. Empfänger-Ausgangssignals angibt. Mit Einschalten des Transistors T2 steigt die Versorgungsspannung stetig bis zur nominellen Betriebsspannung an, deren Wert in Fig. 3(a) mit "1" bezeichnet ist. Mit "1/X" ist der vorgegebene Wert bezeichnet, mit dem die Referenzspannung VRef verglichen wird. Z.B. ist dieser Wert 2/3 der nominellen Betriebsspannung. Mit Erreichen dieses Werts erfolgt ein Umschalten des Empfänger-Ausgangssignals vom Pegel "1" zum Pegel "0" . Der zum Zeitpunkt der Umschaltung bestehende Wert der Referenzspannung liefert ein Maß für die Qualität bzw. Funktionsfähigkeit der Lichtschranke.

Selbstverständlich ist die Erfindung nicht auf das konkret beschriebene Ausführungsbeispiel beschränkt, sondern vielmehr können zahlreiche Änderungen vorgenommen werden, wobei auch andere Merkmalskombinationen als in den abhängigen Ansprüchen angegeben realisiert werden können.

## Patentansprüche

1. Vorrichtung zur Funktionskontrolle einer Lichtschranke mit einem Sender und Empfänger, wobei der Sender an einen Versorgungsanschluß (V2) angeschlossen ist,
wobei die Vorrichtung zur Funktionskontrolle zwei Transistoren (T1, T2), einen Kondensator (C), drei widerstände (R1, R2, R3) und vier Anschlüsse (V2, V1, VE, Vref) umfaßt,
wobei als erster Anschluß (V2) der Versorgungsanschluß des Senders der Lichtschranke vorgesehen ist,
wobei ein erster (T1) der Transistoren (T1, T2) zwischen den ersten Anschluß (V2) und den zweiten Anschluß (V1) geschaltet ist und seine Basis über eine Parallelschaltung des zweiten Transistors (T2) und des Kondensators (C1) mit dem dritten Anschluß (E) verbunden ist,
wobei der Kondensator (C1) über den ersten Widerstand (R1) auch mit dem zweiten Anschluß (V1) verbunden ist,
wobei eine Reihenschaltung des zweiten und dritten Widerstands (R2, R3) zwischen dem ersten Anschluß (V2) und dem dritten Anschluß (E) angeschlossen ist und der Knotenpunkt zwischen diesen beiden Widerständen (R2, R3) der Anschluß für eine Referenzspannung (Vref) ist,
wobei an der Basis des zweiten Transistors (T2) ein Ein/Ausschaltsignal in Betrieb anliegt.

2. Vorrichtung nach Anspruch 1, dadurch **gekennzeichnet,** daß die Vorrichtung ein Steuerglied umfaßt, das das Ein/Ausschaltsignal liefert und die Referenzspannung (Vref) des Anschlusses aufnimmt, und das Steuerglied eine Diskriminationseinrichtung umfaßt, die bei Lichtempfang den Wert der Referenzspannung mit einem vorgegebenen Wert vergleicht.

3. Vorrichtung nach Anspruch 2, dadurch gekennzeichnet, daß das Ausgangssignal der Diskriminationseinrichtung bei Überschreiten des vorgegebenen Werts ein die Funktionsfähigkeit anzeigendes Signal ist.

4. Vorrichtung nach Anspruch 2 oder 3, dadurch gekennzeichnet, daß der vorgegebene Wert oberhalb der Funktionsgrenze der Lichtschranke gewählt ist, wobei das Ausgangssignal der Diskriminationseinrichtung bei Unterschreiten des vorgegebenen Werts ein Frühwarnsignal ist.

5. Vorrichtung nach einem der Ansprüche 1 bis 4, dadurch gekennzeichnet, daß der Wert der Referenzspannung (Vref) als Basis für ein die Leistung der Lichttschranke anzeigendes Qualitätssignal verwendet wird.

6. Vorrichtung nach einem der Ansprüche 2 bis 5, dadurch gekennzeichnet, daß das Steuerglied eine Einrichtung umfaßt, die mit Einschalten der Lichtschranke automatisch das Ein/Ausschaltsignal an den zweiten Transistor (T2) für einen Autotest anlegt.

7. Vorrichtung nach einem der Ansprüche 2 bis 6, dadurch gekennzeichnet, daß das Steuerglied eine Einrichtung umfaßt, die bei Betätigung das Ein/Ausschaltsignal an den zweiten Transistor (T2) für einen Autotest anlegt.

8. Vorrichtung nach einem der Ansprüche 1 bis 7, dadurch gekennzeichnet, daß Transistor (T1) ein Darlingtontransistor ist.

9. Vorrichtung nach einem der Ansprüche 2 bis 8, dadurch gekennzeichnet, daß das Steuerglied einen Rechner umfaßt.

## Claims

1. Functional control apparatus for controlling the operation of a light barrier, including a transmitter and a receiver, the transmitter being connected to a supply terminal (V2),
wherein the functional control apparatus includes two transistors (T1, T2), a capacitor (C), three resistors (R1, R2, R3) and four terminals (V2, V1, VE, Vref),
wherein the supply terminal of the transmitter of the light barrier is provided as first terminal (V2),
wherein a first (T1) of the transistors (T1, T2) is connected between the first terminal (V2) and the second terminal (V1), and its base is connected to the third terminal (E) via a parallel connection of the second transistor (T2) and the capacitor (C1),
wherein the capacitor (C1) is also connected to the second terminal (V1) via the first resistor (R1),
wherein a series connection of the second and third resistors (R2, R3) is connected between the first terminal (V2) and the third terminal (E), and the junction between these two resistors (R2, R3) is the terminal for a reference voltage (Vref),
wherein a switch-on/switch-off signal, in operation, is applied to the base of the second transistor (T2).

2. Apparatus according to claim 1, characterised in that the apparatus includes a control member which supplies the switch-on/switch-off signal and receives the reference voltage (Vref) of the terminal, and the control member includes a discrimination means which compares the value of the reference voltage with a prescribed value when light is received.

3. Apparatus according to claim 2, characterised in that the output signal of the discrimination means is a signal, which indicates the operability, if the prescribed value is exceeded.

4. Apparatus according to claim 2 or 3, characterised in that the prescribed value is selected above the operational limit of the light barrier, the output signal of the discrimination means being an early warning signal if the prescribed value is not reached.

5. Apparatus according to one of claims 1 to 4, characterised in that the value of the reference voltage (Vref) is used as the basis for a quality signal indicating the output of the light barrier.

6. Apparatus according to one of claims 2 to 5, characterised in that the control member includes a means which, when the light barrier is switched-on, automatically applies the switch-on/switch-off signal to the second transistor (T2) for a car test.

7. Apparatus according to one of claims 2 to 6, characterised in that the control member includes a means which, when actuated, applies the switch-on/switch-off signal to the second transistor (T2) for a car test.

8. Apparatus according to one of claims 1 to 7, characterised in that transistor (T1) is a Darlington transistor.

9. Apparatus according to one of claims 2 to 8, characterised in that the control member includes a computer.

## Revendications

1. Dispositif pour le contrôle du fonctionnement d'un barrage photoélectrique ayant un émetteur et un récepteur, l'émetteur étant connecté à une borne d'alimentation (V2),
le dispositif pour le contrôle du fonctionnement comprenant deux transistors (T1, T2), un condensateur (C), trois résistances (R1, R2, R3) et quatre bornes (V2, V1, E, Vref),
la borne d'alimentation étant prévue en tant que première borne (V2) de l'émetteur du barrage photoélectrique,
un premier (T1) des transistors (T1, T2) étant connecté entre la première borne (V2) et la deuxième borne (V1) et sa base étant reliée à la troisième borne (E) à travers un circuit parallèle du deuxième transistor (T2) et du condensateur (C1),
le condensateur (C1) étant également relié à la deuxième borne (V1) à travers la première résistance (R1),
un circuit série des deuxième et troisième résistances (R2, R3) étant connecté entre la première borne (V2) et la troisième borne (E) et le point de connexion entre ces deux résistances (R2, R3) étant la borne pour une tension de référence (Vref),
un signal de marche/arrêt étant appliqué en fonctionnement à la base du deuxième transistor (T2).

2. Dispositif selon la revendication 1, caractérisé en ce que le dispositif comprend un élément de commande qui délivre un signal de marche/arrêt et reçoit la tension de référence (Vref) de la borne, et l'élément de commande comprend un dispositif de discrimination qui, lors de la photoréception, compare la valeur de la tension de référence avec une valeur prédéterminée.

3. Dispositif selon la revendication 2, caractérisé en ce que le signal de sortie du dispositif de discrimination lorsqu'il est supérieur à la valeur déterminée est un signal indiquant la capacité de fonctionnement.

4. Dispositif selon la revendication 2 ou 3, caractérisé en ce que la valeur prédéterminée est choisie supérieure à la limite de fonctionnement du barrage photoélectrique, le signal de sortie du dispositif de discrimination lorsqu'il est inférieur à la valeur prédéterminée étant un signal de pré-alarme.

5. Dispositif selon l'une des revendications 1 à 4, caractérisé en ce que la valeur de la tension de référence (Vref) est utilisée comme base pour un signal de qualité indiquant la puissance du barrage photoélectrique.

6. Dispositif selon l'une des revendications 2 à 5, caractérisé en ce que l'élément de commande comprend un dispositif qui, lors de la mise en service du barrage photoélectrique, applique automatiquement le signal de marche/arrêt au deuxième transistor (T2) pour un autocontrôle.

7. Dispositif selon l'une des revendications 2 à 6, caractérisé en ce que l'élément de commande comprend un dispositif qui, lors de l'activation, applique le signal de marche/arrêt au deuxième transistor (T2) pour un autocontrôle.

8. Dispositif selon l'une des revendications 1 à 7, caractérisé en ce que le transistor (T1) est un transistor de Darlington.

9. Dispositif selon l'une des revendications 2 à 8, caractérisé en ce que l'élément de commande est un ordinateur.
